# EUROPEAN PATENT APPLICATION

(11) **EP 4 835 005 A1**
(43) Date of publication of application: **04.11.2026**
(21) Application number: 24912990.9
(22) Date of filing: 26.12.2024
(51) Int. Cl.: C08L 77/00, B29C 55/26, B65D 65/40, C08J 5/18, C08L 23/26

(54) **COMPOSITION, BASE FILM, STRETCHED FILM, LAMINATE, PACKAGING MATERIAL, EXTERIOR MATERIAL, AND METHOD FOR PRODUCING STRETCHED FILM**

(30) Priority: 28.12.2023 JP 2023222521
(71) Applicant: Idemitsu Unitech Co., Ltd., Tokyo 108-0014 (JP)
(72) Inventor: NISHIHARA, Ryo, Tokyo 108-0014 (JP)
(74) Representative: Gille Hrabal Partnerschaftsgesellschaft mbB Patentanwälte
(86) International application number: PCT/JP2024/046112
(87) International publication number: WO 2025/143104

(57) **Abstract**

A composition contains a polyamide resin; and an ethylene-(meth)acrylate-maleic anhydride copolymer, in which a content of a (meth)acrylate structural unit in the ethylene-(meth)acrylate-maleic anhydride copolymer is in a range from 9 mass% to 23 mass%.

## Description

### TECHNICAL FIELD

The present invention relates to a composition, a raw film, a stretched film, a laminate, a packaging material, an exterior material, and a method for producing the stretched film.

### BACKGROUND ART

Films using nylon or the like are excellent in strength, impact resistance, and the like. Therefore, laminate packaging materials including such films can be suitably used for applications such as battery packaging, pharmaceutical packaging (press through package (PTP)), daily commodity packaging (e.g., refill packaging materials for liquid detergents), and food packaging.

For example, Patent Literature 1 and Patent Literature 2 disclose an exterior material for a lithium-ion battery in which a base material layer has a film base material.

### CITATION LIST

### PATENT LITERATURE(S)

Patent Literature 1: JP 2014-041833 A
Patent Literature 2: International Publication No. WO2012/033133

### SUMMARY OF THE INVENTION

### PROBLEM(S) TO BE SOLVED BY THE INVENTION

Known films have also been usable, for example, as exterior materials for lithium-ion secondary batteries (LiBs). However, in recent years, depending on the application, an increase in the capacity of packaging materials has been required, and it has become necessary to draw films deeply.

An object of the invention is to provide a composition from which a deep-drawable film can be readily produced.

Another object of the invention is to provide a raw film, a stretched film, a laminate, a packaging material, and an exterior material, each containing the composition, as well as a method for producing the stretched film.

### MEANS FOR SOLVING THE PROBLEM(S)

According to an aspect of the invention, there is provided a composition containing a polyamide resin; and an ethylene-(meth)acrylate-maleic anhydride copolymer, in which a content of a (meth)acrylate structural unit in the ethylene-(meth)acrylate-maleic anhydride copolymer is in a range from 9 mass% to 23 mass%.

In the composition according to the aspect of the invention, the content of the (meth)acrylate structural unit in the ethylene-(meth)acrylate-maleic anhydride copolymer may be 20 mass% or less.

In the composition according to the aspect of the invention, a melt flow rate of the ethylene-(meth)acrylate-maleic anhydride copolymer may be 9 g/10 min or more.

In the composition according to the aspect of the invention, a content of the ethylene-(meth)acrylate-maleic anhydride copolymer in the composition may be 10 mass% or less.

In the composition according to the aspect of the invention, a content of the ethylene-(meth)acrylate-maleic anhydride copolymer in the composition may be 1 mass% or more.

In the composition according to the aspect of the invention, the polyamide resin may be at least one resin selected from the group consisting of nylon 6, nylon 8, nylon 9, nylon 10, nylon 11, nylon 12, nylon 4,6, nylon 6,6, nylon 6,10, nylon 6,11, nylon 6,12, nylon 6T, nylon 9T, and meta-xylylenediamine-6-nylon (MXD6).

According to another aspect of the invention, there is provided a raw film containing the composition according to the aspect of the invention.

According to still another aspect of the invention, there is provided a stretched film containing the composition according to the aspect of the invention.

In the stretched film according to the still another aspect of the invention, a tensile strength of the stretched film at 80% elongation in a machine direction, MD, may be 190 MPa or more, and a tensile strength of the stretched film at 80% elongation in a transverse direction, TD, may be 190 MPa or more.

In the stretched film according to the still another aspect of the invention, a puncture strength of the stretched film may be 5,900 N/cm or more.

According to a further aspect of the invention, there is provided a laminate including the stretched film according to the still another aspect of the invention.

According to a still further aspect of the invention, there is provided a packaging material including the stretched film according to the still another aspect of the invention.

According to a still further aspect of the invention, there is provided an exterior material including the stretched film according to the still another aspect of the invention.

According to a still further aspect of the invention, there is provided an exterior material including the laminate according to the further aspect of the invention.

According to a still further aspect of the invention, there is provided a method for producing the stretched film according to the still another aspect of the invention, the method including: producing a raw film from a raw material; and stretching the raw film by tubular biaxial stretching.

According to a still further aspect of the invention, there is provided a method for producing a stretched film, the method including: producing the raw film according to the still further aspect of the invention; and stretching the raw film by tubular biaxial stretching.

According to the aspect of the invention, it is possible to provide a composition from which a deep-drawable film can be readily produced.

According to the aspects of the invention, it is possible to provide a raw film, a stretched film, a laminate, a packaging material, and an exterior material, each containing the composition, as well as a method for producing the stretched film.

### BRIEF DESCRIPTION OF DRAWINGS

Fig. 1 schematically illustrates a film according to an exemplary embodiment of the invention.
Fig. 2 schematically illustrates an exemplary apparatus used in a method for producing the film according to the exemplary embodiment of the invention.
Fig. 3 is a schematic cross-sectional view of a laminate according to the exemplary embodiment of the invention.
Fig. 4 is a schematic cross-sectional view of a lithium-ion secondary battery using an exterior material according to the exemplary embodiment of the invention.

### DESCRIPTION OF EMBODIMENT(S)

### First Exemplary Embodiment

In a first exemplary embodiment, a composition according to an aspect of the invention will be described.

### Composition

A composition according to the first exemplary embodiment contains a polyamide resin and an ethylene-(meth)acrylate-maleic anhydride copolymer.

### Polyamide Resin

Examples of the polyamide resin contained in the composition according to the first exemplary embodiment include one or more polyamide resins selected from the group consisting of nylon 6, nylon 8, nylon 9, nylon 10, nylon 11, nylon 12, nylon 4,6, nylon 6,6, nylon 6,10, nylon 6,11, nylon 6,12, nylon 6T, nylon 9T, meta-xylylenediamine-6-nylon (MXD6), and the like.

The composition according to the first exemplary embodiment may contain two or more polyamide resins.

These polyamide resins are not necessarily required to be derived from fossil fuels, and may, for example, be plant-derived polyamide resins in consideration of the environment, or may be a combination of fossil fuel-derived polyamide resins and plant-derived polyamide resins. For example, when the composition according to the first exemplary embodiment contains two polyamide resins, both of the two polyamide resins may be fossil fuel-derived polyamide resins, or one of the two polyamide resins may be a fossil fuel-derived polyamide resin and the other may be a plant-derived polyamide resin, or both of the two polyamide resins may be plant-derived polyamide resins.

The polyamide resin is preferably at least one resin selected from the group consisting of nylon 6, nylon 8, nylon 9, nylon 10, nylon 11, nylon 12, nylon 4,6, nylon 6,6, nylon 6,10, nylon 6,11, nylon 6,12, nylon 6T, nylon 9T, and meta-xylylenediamine-6-nylon (MXD6), and is more preferably nylon 6.

The content of the polyamide resin in the composition according to the first exemplary embodiment is preferably 50 mass% or more, more preferably 75 mass% or more, still more preferably 80 mass% or more, and still further more preferably 90 mass% or more.

The content of the polyamide resin in the composition according to the first exemplary embodiment is preferably 99 mass% or less, more preferably 98 mass% or less, and still more preferably 97 mass% or less.

### Ethylene-(Meth)acrylate-Maleic Anhydride Copolymer

In the composition according to the first exemplary embodiment, the content of a (meth)acrylate structural unit in the ethylene-(meth)acrylate-maleic anhydride copolymer (hereinafter, also referred to as the "MA content") is preferably in a range from 9 mass% to 23 mass%.

When the content of the (meth)acrylate structural unit in the ethylene-(meth)acrylate-maleic anhydride copolymer is in a range from 9 mass% to 23 mass%, the stress during stretching of a raw film can be reduced and the stretching ratio can be increased, while maintaining the puncture strength and the tensile strength at 80% elongation of a stretched film containing the composition according to the first exemplary embodiment (when the stretched film containing the composition according to the first exemplary embodiment is stretched by a factor of 1.8). As a result, the tensile strength of the film after stretching is increased and pinholes are less likely to be formed during deep drawing, so that a deep-drawable stretched film can be produced.

For example, an LiB exterior material is formed into a convex shape by cold press forming so as to accommodate positive electrodes, negative electrodes, and the like. Increasing the depth of the convex shape formed in this manner is referred to as "deep drawing".

The content of the (meth)acrylate structural unit in the ethylene-(meth)acrylate-maleic anhydride copolymer is more preferably 20 mass% or less, and still more preferably 18 mass% or less. When the content is 20 mass% or less, the puncture strength and the tensile strength at 80% elongation of the resulting stretched film tend to be higher.

The content of the (meth)acrylate structural unit in the ethylene-(meth)acrylate-maleic anhydride copolymer is more preferably 10 mass% or more, and still more preferably 11 mass% or more.

In the composition according to the first exemplary embodiment, the melt flow rate (MFR) of the ethylene-(meth)acrylate-maleic anhydride copolymer is preferably 9 g/10 min or more.

When the MFR of the ethylene-(meth)acrylate-maleic anhydride copolymer is 9 g/10 min or more, the dispersibility of the ethylene-(meth)acrylate-maleic anhydride copolymer with respect to the polyamide resin is improved, and the impact resistance of the stretched film produced from the composition according to the first exemplary embodiment as a raw material becomes higher.

In the composition according to the first exemplary embodiment, the MFR of the ethylene-(meth)acrylate-maleic anhydride copolymer is more preferably 10 g/10 min or more, still more preferably 12 g/10 min or more, and still further more preferably 25 g/10 min or more.

From the viewpoint of film-forming stability in producing an unstretched raw film, in the composition according to the first exemplary embodiment, the MFR of the ethylene-(meth)acrylate-maleic anhydride copolymer is preferably 100 g/10 min or less, more preferably 90 g/10 min or less, and still more preferably 80 g/10 min or less.

Herein, the melt flow rate of the ethylene-(meth)acrylate-maleic anhydride copolymer can be measured in conformity with JIS K6922-2 at a measurement temperature of 190 degrees C and under a load of 2.16 kg.

The content of the ethylene-(meth)acrylate-maleic anhydride copolymer in the composition according to the first exemplary embodiment is preferably 10 mass% or less.

When the content of the ethylene-(meth)acrylate-maleic anhydride copolymer is 10 mass% or less, the stress during stretching of the raw film tends to be reduced while maintaining the puncture strength and the tensile strength at 80% elongation.

The content of the ethylene-(meth)acrylate-maleic anhydride copolymer in the composition according to the first exemplary embodiment is more preferably 9 mass% or less, and still more preferably 8 mass% or less.

The content of the ethylene-(meth)acrylate-maleic anhydride copolymer in the composition according to the first exemplary embodiment is preferably 1 mass% or more.

The content of the ethylene-(meth)acrylate-maleic anhydride copolymer in the composition according to the first exemplary embodiment is more preferably 2 mass% or more, and still more preferably 3 mass% or more.

### Other Components

The composition according to the first exemplary embodiment may contain only the polyamide resin and the ethylene-(meth)acrylate-maleic anhydride copolymer, or may contain other components in addition to the polyamide resin and the ethylene-(meth)acrylate-maleic anhydride copolymer.

For example, the composition according to the first exemplary embodiment may contain one or more additives selected from the group consisting of an antiblocking agent, a slip agent, a water repellent, an anti die-drool agent, an antioxidant, and a neutralizing agent.

The composition according to the first exemplary embodiment may also contain impurities to the extent that the effects of the invention are not impaired.

### Second Exemplary Embodiment

In a second exemplary embodiment, a film and a method for producing the film according to an aspect of the invention will be described in detail as a preferred exemplary embodiment of the invention with reference to the accompanying drawings. Components having substantially the same functional configuration are denoted by the same reference numeral herein and in the drawings, and duplicate descriptions thereof will be omitted.

### Film

The film according to the second exemplary embodiment contains a composition according to an aspect of the invention.

For example, a film according to an aspect of the invention is a raw film containing a composition according to an aspect of the invention.

For example, a film according to an aspect of the invention is a stretched film containing a composition according to an aspect of the invention. A stretched film according to an aspect of the invention is obtained by stretching a raw film containing, as a raw material, a composition according to an aspect of the invention.

In this case, the raw film to be used as the raw material is preferably stretchable under conditions in which the maximum stress in a machine direction (MD) is 1.50 kgf or less and the maximum stress in a transverse direction (TD) is 1.50 kgf or less.

When the maximum stresses in the MD and the TD are not more than the above values, the stretched film can be produced while reducing the load on the apparatus.

The stress of the raw film can be measured according to a measurement method described in Examples below.

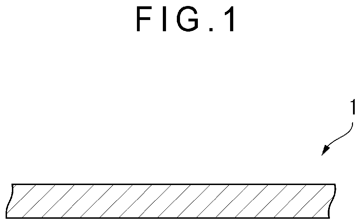

Fig. 1 is a schematic cross-sectional view of a stretched film 1 according to the second exemplary embodiment.

The stretched film 1 according to the second exemplary embodiment may be used as a single-layer film, or may be used as at least one layer of a laminate having a plurality of layers, as described below.

The stretched film 1 according to the second exemplary embodiment preferably has a tensile strength at 80% elongation in the MD (when a stretched film according to an aspect of the invention is stretched by a factor of 1.8 in the MD) of 190 MPa or more, and a tensile strength at 80% elongation in the TD (when a stretched film according to an aspect of the invention is stretched by a factor of 1.8 in the TD) of 190 MPa or more.

When the tensile strengths of the stretched film 1 at 80% elongation in the MD and the TD are each 190 MPa or more, the drawing depth can be made deeper when a packaging material is formed using the stretched film 1, and a packaging material having excellent capacity can be obtained.

The stretched film 1 according to the second exemplary embodiment more preferably has a tensile strength at 80% elongation in the MD of 200 MPa or more and a tensile strength at 80% elongation in the TD of 200 MPa or more, and still more preferably has a tensile strength at 80% elongation in the MD of 210 MPa or more and a tensile strength at 80% elongation in the TD of 210 MPa or more.

The stretched film 1 according to the second exemplary embodiment also preferably has a tensile strength at 80% elongation in a direction of 45 degrees with respect to the TD (when a stretched film according to an aspect of the invention is stretched by a factor of 1.8 in a direction of 45 degrees with respect to the TD) of 190 MPa or more.

In this case, the tensile strength is more preferably 200 MPa or more, and still more preferably 210 MPa or more.

The stretched film 1 according to the second exemplary embodiment also preferably has a tensile strength at 80% elongation in a direction of 135 degrees with respect to the TD (when a stretched film according to an aspect of the invention is stretched by a factor of 1.8 in a direction of 135 degrees with respect to the TD) of 190 MPa or more.

In this case, the tensile strength is more preferably 200 MPa or more, and still more preferably 210 MPa or more.

The stretched film 1 according to the second exemplary embodiment also preferably has a tensile strength at 80% elongation in a direction of 45 degrees with respect to the TD of 190 MPa or more and a tensile strength at 80% elongation in a direction of 135 degrees with respect to the TD of 190 MPa or more.

When both the tensile strength at 80% elongation in a direction of 45 degrees with respect to the TD and the tensile strength at 80% elongation in a direction of 135 degrees with respect to the TD are 190 MPa or more, anisotropy in stretching behavior does not occur when the stretched film is press-formed or the like, and breakage can be prevented.

In this case, it is more preferable that the tensile strength at 80% elongation in a direction of 45 degrees with respect to the TD be 200 MPa or more and that the tensile strength at 80% elongation in a direction of 135 degrees with respect to the TD be 200 MPa or more, and it is still more preferable that the tensile strength at 80% elongation in a direction of 45 degrees with respect to the TD be 210 MPa or more and that the tensile strength at 80% elongation in a direction of 135 degrees with respect to the TD be 210 MPa or more.

The stretched film 1 according to the second exemplary embodiment preferably has, for each of the tensile strength at 80% elongation in the MD, the tensile strength at 80% elongation in the TD, the tensile strength at 80% elongation in a direction of 45 degrees with respect to the TD, and the tensile strength at 80% elongation in a direction of 135 degrees with respect to the TD, a difference of 70 MPa or less from an average value of these tensile strengths.

The stretched film 1 according to the second exemplary embodiment also preferably has a difference of 60 MPa or less between the maximum value and the minimum value among the tensile strength at 80% elongation in the MD, the tensile strength at 80% elongation in the TD, the tensile strength at 80% elongation in a direction of 45 degrees with respect to the TD, and the tensile strength at 80% elongation in a direction of 135 degrees with respect to the TD.

When the difference between the maximum value and the minimum value is 60 MPa or less in the stretched film 1, variation in tensile strength among the respective directions is prevented, and a packaging material can be formed into a desired shape when produced using the stretched film 1.

The stretched film 1 according to the second exemplary embodiment preferably has, as tensile properties in the MD, a tensile strength at break of 290 MPa or more, and more preferably a tensile strength at break of 300 MPa or more. The stretched film 1 according to the second exemplary embodiment also preferably has, as tensile properties in the MD, a tensile strength at break of 450 MPa or less, and more preferably 420 MPa or less.

The stretched film 1 according to the second exemplary embodiment preferably has, as tensile properties in the TD, a tensile strength at break of 290 MPa or more, and more preferably a tensile strength at break of 300 MPa or more. The stretched film 1 according to the second exemplary embodiment also preferably has, as tensile properties in the TD, a tensile strength at break of 450 MPa or less, and more preferably 420 MPa or less.

When at least one of the tensile property (tensile strength at break) in the MD or the tensile property (tensile strength at break) in the TD of the stretched film 1 according to the second exemplary embodiment falls within the above range, the stretched film 1 is excellent in formability. When the stretched film 1 is excellent in formability, a laminate and an exterior material including the stretched film 1 can be more easily press-formed.

The stretched film 1 according to the second exemplary embodiment more preferably has, as tensile properties in the MD, a tensile strength at break of 290 MPa or more and, as tensile properties in the TD, a tensile strength at break of 290 MPa or more, and still more preferably has a tensile strength at break of 300 MPa or more in both the MD and the TD. Further, it is more preferable that the stretched film 1 according to the second exemplary embodiment has a tensile strength at break of 310 MPa or less in both the MD and the TD.

The stretched film 1 according to the second exemplary embodiment preferably has, as tensile properties in the MD, an elongation at break (hereinafter, also referred to as an "elongation") of 50% or more, more preferably an elongation of 55% or more, and still more preferably an elongation of 60% or more. Further, the stretched film 1 according to the second exemplary embodiment preferably has, as tensile properties in the MD, an elongation of 100% or less, more preferably 95% or less, and still more preferably 90% or less.

The stretched film 1 according to the second exemplary embodiment preferably has, as tensile properties in the TD, an elongation of 50% or more, more preferably an elongation of 55% or more, and still more preferably an elongation of 60% or more. Further, the stretched film 1 according to the second exemplary embodiment preferably has, as tensile properties in the TD, an elongation of 100% or less, more preferably 95% or less, and still more preferably 90% or less.

When at least one of the tensile property (elongation) in the MD or the tensile property (elongation) in the TD of the stretched film 1 according to the second exemplary embodiment falls within the above range, the stretched film 1 is superior in formability.

The stretched film 1 according to the second exemplary embodiment more preferably has, as tensile properties in the MD, an elongation of 50% or more and, as tensile properties in the TD, an elongation of 50% or more. Further, it is more preferable that the stretched film 1 according to the second exemplary embodiment has an elongation of 55% or less in both the MD and the TD.

The tensile properties (tensile strength, elastic modulus, tensile strength at break, and elongation at break) of the stretched film 1 can be measured according to ASTM D882. Specifically, the tensile properties can be measured according to the measurement method described in Examples below.

From the viewpoint of improving pinhole resistance, the stretched film 1 according to the second exemplary embodiment preferably has a puncture strength of 5,900 N/cm or more.

The stretched film 1 according to the second exemplary embodiment more preferably has a puncture strength of 6,100 N/cm or more, and still more preferably 6,300 N/cm or more.

The stretched film 1 according to the second exemplary embodiment preferably has a puncture strength of 20,000 N/cm or less, more preferably 18,000 N/cm or less, and still more preferably 16,000 N/cm or less.

Herein, the puncture strength can be measured according to the measurement method described in Examples below.

From the viewpoint of improving impact resistance, the stretched film 1 according to the second exemplary embodiment preferably has an impact strength of 80,000 J/m or more.

The stretched film 1 according to the second exemplary embodiment more preferably has an impact strength of 85,000 J/m or more, and still more preferably 90,000 J/m or more.

The stretched film 1 according to the second exemplary embodiment preferably has an impact strength of 300,000 J/m or less, more preferably 280,000 J/m or less, and still more preferably has a puncture strength of 200,000 J/m or less.

Herein, the impact strength can be measured according to the measurement method described in Examples below.

From the viewpoint of improving resistance to flexing-induced pinholing, the film 1 according to the second exemplary embodiment preferably has 15 pinholes/A4 or less in the film, as measured under conditions of 23 degrees C and 1,000 cycles using a Gelbo flex tester. The number of pinholes is more preferably 10 pinholes/A4 or less, and still more preferably 5 pinholes/A4 or less.

Herein, the number of pinholes is a value measured after the stretched film 1 according to the second exemplary embodiment has been produced.

The method for producing the stretched film according to the second exemplary embodiment is not particularly limited.

An exemplary method for producing the stretched film will be described below with reference to the drawings, the method including a step of tubular biaxial stretching.

### Apparatus for Producing Stretched Film

First, an exemplary apparatus for producing the stretched film according to the second exemplary embodiment will be described.

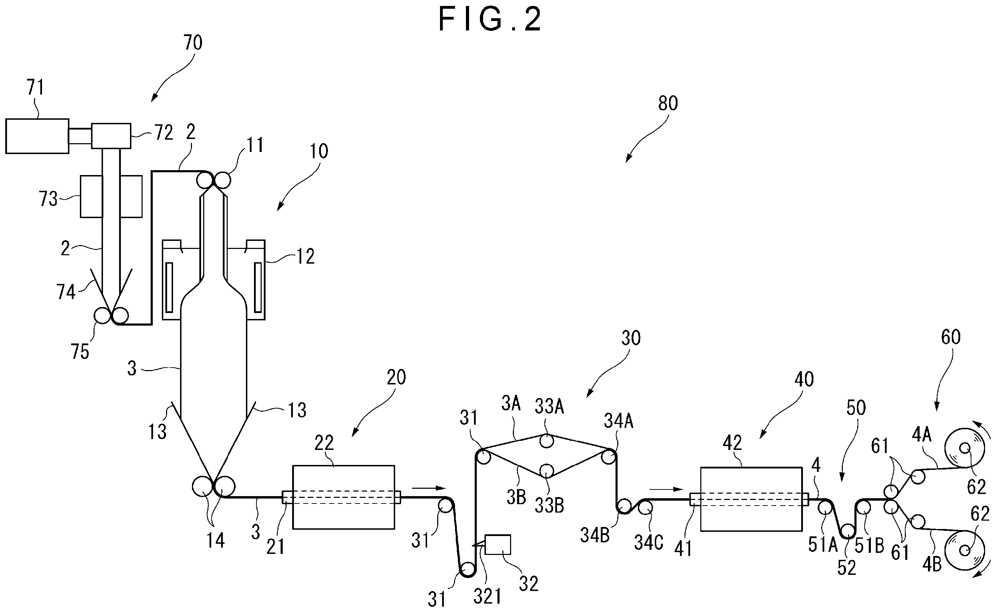

As illustrated in Fig. 2, a film production apparatus 80 includes: a raw-film production apparatus 70 for producing a raw film 2; a biaxial stretching apparatus (tubular stretching apparatus) 10 for stretching the raw film 2; a first heat treatment apparatus 20 (preheating furnace) for preheating a base film 3 folded after stretching (hereinafter, also simply referred to as the "film 3"); a separation apparatus 30 for separating the preheated film 3 into upper and lower two sheets; a second heat treatment apparatus 40 for heat-treating (heat-setting) the separated film 3; a tension control apparatus 50 for applying tension to the film 3 from the downstream side when the film 3 is heat-set; and a winding apparatus 60 for winding up the biaxially stretched film 4 formed by heat-setting the film 3 (hereinafter, also simply referred to as the "film 4").

As illustrated in Fig. 2, the raw-film production apparatus 70 includes an extruder 71, a circular die 72, a water-cooling ring 73, a stabilizing plate 74, and a pinch roll 75.

The tubular stretching apparatus 10 is an apparatus for producing the film 3 by biaxially stretching (bubble stretching) the tubular raw film 2 by the pressure of internal air. As illustrated in Fig. 2, the tubular stretching apparatus 10 includes a pinch roll 11, a heating unit 12, a guide plate 13, and a pinch roll 14.

The first heat treatment apparatus 20 is an apparatus for preliminarily heat-treating the flattened film 3. As illustrated in Fig. 2, the first heat treatment apparatus 20 includes a tenter 21 and a heating furnace 22.

As illustrated in Fig. 2, the separation apparatus 30 includes a guide roll 31, a trimming apparatus 32, separation rolls 33A and 33B, and grooved rolls 34A, 34B, and 34C. The trimming apparatus 32 includes a blade 321.

As illustrated in Fig. 2, the second heat treatment apparatus 40 includes a tenter 41 and a heating furnace 42.

As illustrated in Fig. 2, the tension control apparatus 50 includes guide rolls 51A and 51B and a tension roll 52.

As illustrated in Fig. 2, the winding apparatus 60 includes a guide roll 61 and a winding roll 62.

### Method for Producing Biaxially Stretched Film

Subsequently, each step of producing a biaxially stretched film using the film production apparatus 80 will be described in detail.

### Raw Film Production Step

As illustrated in Fig. 2, a composition containing a polyamide resin and an ethylene-(meth)acrylate-maleic anhydride copolymer as raw materials is melt-kneaded by the extruder 71 and extruded into a tubular shape through the circular die 72. The tubular molten resin is cooled by the water-cooling ring 73. The raw film 2 is formed by quenching the molten resin as a raw material with the water-cooling ring 73. This raw film 2 corresponds to a raw film according to the second exemplary embodiment.

The cooled raw film 2 is folded by the stabilizing plate 74. The folded raw film 2 is sent, as a flattened film, to the next biaxial stretching step by the pinch roll 75.

### Biaxial Stretching Step

As illustrated in Fig. 2, the raw film 2 produced in the raw-film production step is introduced, as a flattened film, into the apparatus by the pinch roll 11. The introduced raw film 2 is bubble-stretched by being heated with infrared rays in the heating unit 12. Thereafter, the film 3 after the bubble stretching is folded by the guide plate 13. The folded film 3 is pinched by the pinch roll 14 and sent, as the flattened film 3, to the next first heat treatment step.

At this time, when the stretching ratios in the MD and the TD are each set to 2.8 times or more, improvement in impact strength can be expected. In addition, when the raw film contains the ethylene-(meth)acrylate-maleic anhydride copolymer, the load on the apparatus in the biaxial stretching step can be reduced, and the stretching ratio can be increased.

The stretching ratios in the MD and the TD are preferably 3.0 times or more, more preferably 3.3 times or more, and still more preferably 3.5 times or more.

The difference obtained by subtracting the stretching ratio in the MD from the stretching ratio in the TD (TD - MD) is preferably 0.4 or less, more preferably 0.3 or less, and still more preferably 0.2 or less. Further, the value of TD - MD is more preferably 0.1 or more.

When the value of TD - MD is not more than the above upper limit, the resulting film tends to have sufficient deep-draw formability. In particular, when the value of TD - MD is 0.2 or less, the film is excellent in deep-draw formability.

On the other hand, when the value of TD - MD is not less than the above lower limit, the resulting film tends to have sufficient deep-draw formability.

### First Heat Treatment Step

While both end portions of the film 3 are gripped by clips (not illustrated) of the tenter 21, the film 3 sent from the biaxial stretching step is preliminarily heat-treated at a temperature equal to or higher than a shrinkage starting temperature of the film 3 and equal to or lower than a temperature about 30 degrees C lower than a melting point of the film 3, and is then sent to the next separation step.

In the first heat treatment, the heat treatment temperature is preferably in a range from 120 degrees C to 190 degrees C, and the relaxation rate is preferably 15% or less.

The first heat treatment step increases the degree of crystallinity of the film 3, making the slidability between the overlapping films favorable.

### Separation Step

As illustrated in Fig. 2, the flattened film 3 sent via the guide roll 31 is slit at both end portions by the blade 321 of the trimming apparatus 32 and thereby separated into two films 3A and 3B. The films 3A and 3B are then separated by the pair of separation rolls 33A and 33B positioned vertically apart from each other, while air is interposed between the films 3A and 3B. The flattened film 3 may be slit such that partial edge portions are formed by positioning the blade 321 slightly inward from both end portions, or may be slit such that no edge portions are formed by positioning the blade 321 at the folded portions of the film 3.

These films 3A and 3B are again superposed by the three grooved rolls 34A, 34B, and 34C positioned in this order in a film flow direction, and are sent to the next second heat treatment step. The grooved rolls 34A, 34B, and 34C each have a plated surface after groove processing. Through these grooves, a favorable contact state between the films 3A, 3B and air is obtained.

### Second Heat Treatment Step (Heat-Setting Step)

The films 3A and 3B in the overlapped state are heat-treated (heat-set) while both end portions thereof are gripped by clips (not illustrated) of the tenter 41, at a temperature equal to or lower than a melting point of the polyamide resin constituting the film 3 and equal to or higher than a temperature about 30 degrees C lower than the melting point, thereby becoming the biaxially stretched film 4 having stable physical properties (hereinafter, also referred to simply as the "film 4"). This film 4 corresponds to the stretched film 1 according to the second exemplary embodiment.

The heat treatment temperature in the second heat treatment (heat-setting) is preferably 160 degrees C or higher, and more preferably 180 degrees C or higher. The heat treatment temperature in the second heat treatment (heat-setting) is preferably 300 degrees C or lower, and more preferably 270 degrees C or lower.

When the heat treatment temperature is not lower than the above lower limit, the film shrinkage ratio tends not to become excessively large and delamination is not likely to occur.

On the other hand, when the heat treatment temperature is not higher than the above upper limit, the bowing phenomenon during heat-setting tends not to become significant and distortion of the film is not likely to occur. Further, since an increase in density is not likely to occur, the degree of crystallinity tends not to become excessively high, and the film tends to be more easily deformable.

The relaxation rate at this time is preferably 15% or less.

A strong tension is applied to the films 3A and 3B in the heating furnace 42 by the tension control apparatus 50 located on the downstream side.

The film 4 is sent to the next winding step as necessary.

### Winding Step

The film 4 heat-set in the second heat treatment step is wound up, as films 4A and 4B, onto two winding rolls 62 via the guide roll 61 through the tension control apparatus 50.

### Third Exemplary Embodiment

In a third exemplary embodiment, examples of a laminate, a packaging material, and an exterior material of the invention will be described.

### Laminate

A laminate according to the third exemplary embodiment includes a stretched film according to an aspect of the invention.

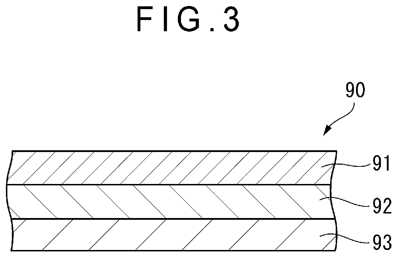

Fig. 3 is a schematic cross-sectional view of the laminate according to the third exemplary embodiment.

The laminate 90 is a laminate having three layers, namely, a first layer 91, a second layer 92, and a third layer 93.

In the laminate 90, it is preferable that at least one of the first layer 91, the second layer 92, or the third layer 93 be the stretched film 1 that is a stretched film according to an aspect of the invention, and it is more preferable that the first layer 91 or the third layer 93 be the stretched film 1 that is a stretched film according to an aspect of the invention.

Among the plurality of layers constituting the laminate 90, the material of a layer that is not the stretched film 1, which is a stretched film according to an aspect of the invention, is not particularly limited. The material can be appropriately selected according to the use of the laminate 90.

For example, as described below, when the laminate is used as an exterior material of a lithium-ion secondary battery, the first layer 91 can be the stretched film 1 that is a stretched film according to an aspect of the invention, the second layer 92 can be an aluminum film, and the third layer 93 can be a film containing polyolefin, preferably a film containing polypropylene, and more preferably a film containing crystalline polypropylene. In this case, the laminate 90 may further include other layers in addition to the first layer 91 (the stretched film 1 that is a stretched film according to an aspect of the invention), the second layer 92 (the aluminum film), and the third layer 93 (the film containing a polyolefin).

### Packaging Material

A packaging material according to the third exemplary embodiment includes a stretched film according to an aspect of the invention. The packaging material according to the third exemplary embodiment can be used, for example, as a packaging material for various applications such as electrical components, foods, pharmaceutical packaging, and daily necessities.

As an example of the packaging material, an exterior material according to an aspect of the invention will be described below.

### Exterior Material

An exterior material according to the third exemplary embodiment includes a stretched film according to an aspect of the invention.

The exterior material according to the third exemplary embodiment is preferably used for pharmaceutical packaging such as PTP packaging, or for secondary batteries mounted in electric vehicles, tablet-type terminal devices, smartphones, and the like.

When the exterior material according to the third exemplary embodiment is used for a secondary battery, it is more preferably used for a lithium-ion secondary battery, and still more preferably used for an in-vehicle lithium-ion secondary battery for an electric vehicle or the like. The exterior material according to the third exemplary embodiment can also be suitably used for an all-solid-state lithium battery.

A stretched film according to an aspect of the invention is deep-drawable. Therefore, when a stretched film according to an aspect of the invention is used for an exterior material, the internal capacity of the exterior material can be increased.

For example, when the exterior material according to the third exemplary embodiment is used as an LiB exterior material, the battery capacity can be increased (that is, a larger amount of battery materials can be accommodated). Also, for example, when the exterior material according to the third exemplary embodiment is used as PTP packaging, a larger tablet can be accommodated.

The exterior material according to the third exemplary embodiment preferably also includes a laminate according to an aspect of the invention.

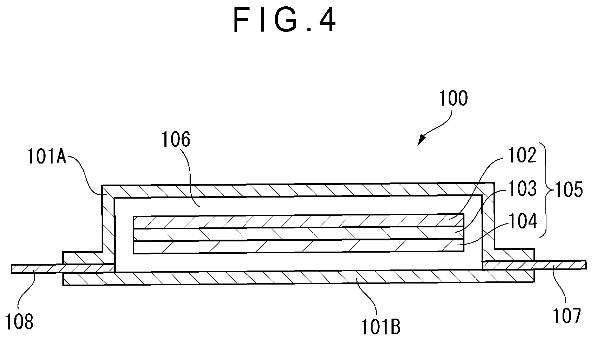

Fig. 4 is a schematic cross-sectional view of a lithium-ion secondary battery using the exterior material according to the third exemplary embodiment.

A lithium-ion secondary battery 100 includes exterior materials 101A and 101B, an electrode assembly 105, an electrolytic solution 106, a positive electrode tab 107, and a negative electrode tab 108. In the electrode assembly 105, a positive electrode 102 and a negative electrode 104 are laminated so as to face each other with the separator 103 interposed therebetween. In the lithium-ion secondary battery 100, the exterior material 101A is draw-formed by press forming or the like so that an accommodating portion capable of accommodating the electrode assembly 105 and the like is formed, whereas the exterior material 101B remains unformed.

The lithium-ion secondary battery 100 can be obtained, for example, by accommodating the electrode assembly 105 and the electrolytic solution 106 inside the exterior material 101A and the exterior material 101B, setting the positive electrode tab 107 at one end in a longitudinal direction of the exterior materials 101A and 101B and the negative electrode tab 108 at the other end, and joining the peripheries of the exterior materials 101A and 101B by heat sealing or the like.

### Modifications

The invention is not limited to the above exemplary embodiments.

For example, in the second exemplary embodiment, the production method including the first heat treatment step and the second heat treatment step (heat-setting step) has been exemplified as the heat treatment step. However, the first heat treatment step may be omitted, and only the second heat treatment step (heat-setting step) may be performed.

For example, in the third exemplary embodiment, a laminate having a three-layer structure including the first layer, the second layer, and the third layer has been exemplified. However, the laminate may have a two-layer structure or a multilayer structure having four or more layers.

For example, in the third exemplary embodiment, an example in which the exterior material is used for a lithium-ion secondary battery has been given. However, the exterior material can also be used for various other applications such as electrical components.

For example, in the third exemplary embodiment, the lithium-ion secondary battery in which only one of the exterior materials is draw-formed has been exemplified. However, both of the exterior materials in the lithium-ion secondary battery may be draw-formed.

### Examples

Examples of the invention will be described below. The invention is by no means limited by these Examples.

### Evaluation 1

Films were produced and evaluated according to a production method below. The raw materials of the films used in the Examples and Comparative Examples were as follows. The blending amounts of the raw materials were as shown in Table 1.

### Examples 1 to 4

### Polyamide Resin

A1: Nylon 6 (trade name: UBE NYLON / grade name: 1022 / produced by UBE Corporation)

### Ethylene-(Meth)acrylate-Maleic Anhydride Copolymer

B1: Ethylene-methyl acrylate-maleic anhydride copolymer (trade name: REXPEARL ET530H / produced by Japan Polyethylene Corporation)

### Examples 5 to 8

### Polyamide Resin

A1: Nylon 6 (trade name: UBE NYLON / grade name: 1022 / produced by UBE Corporation)

### Ethylene-(Meth)acrylate-Maleic Anhydride Copolymer

B2: Ethylene-methyl acrylate-maleic anhydride copolymer (trade name: REXPEARL ET330H / produced by Japan Polyethylene Corporation)

### Examples 9 and 10

### Polyamide Resin

A1: Nylon 6 (trade name: UBE NYLON / grade name: 1022 / produced by UBE Corporation)

### Ethylene-(Meth)acrylate-Maleic Anhydride Copolymer

B3: Ethylene-methyl acrylate-maleic anhydride copolymer (trade name: REXPEARL ET350X / produced by Japan Polyethylene Corporation)

### Comparative Example 1

### Polyamide Resin

A1: Nylon 6 (trade name: UBE NYLON / grade name: 1022 / produced by UBE Corporation)

### Comparative Examples 2 and 3

### Polyamide Resin

A1: Nylon 6 (trade name: UBE NYLON / grade name: 1022 / produced by UBE Corporation)

### Ethylene-(Meth)acrylate-Maleic Anhydride Copolymer

B4: Ethylene-methyl acrylate-maleic anhydride copolymer (trade name: REXPEARL ET220X / produced by Japan Polyethylene Corporation)

### Production of Film

### Raw Film Production Step

Using the above-described polyamide resin and ethylene-(meth)acrylate-maleic anhydride copolymer (in Comparative Example 1, only the polyamide resin), a sheet having a thickness of 80 µm was formed with a T-die extrusion molding machine produced by Labtech. The sheet was cut into a square having an MD of 85 mm and a TD of 85 mm, thereby preparing an unstretched raw film.

### Biaxial Stretching Step

Next, the unstretched raw film was stretched using a biaxial stretching machine produced by Iwamoto Seisakusho Co., Ltd. (model No. BIX-702S) under conditions of a stretching temperature of 130 degrees C, a preheating time of 30 sec, and a stretching speed of 60 mm/sec, thereby producing a stretched film.

In Example 1, Example 5, Example 9, and Comparative Examples 1 and 2, the stretching ratios in the MD and the TD were each set to 3.3 times, and "stretching ratio (MD x TD)" was indicated as 3.3 x 3.3 in Table 1. In Examples 2 to 4, Examples 6 to 8, Example 10, and Comparative Example 3, the stretching ratios in the MD and the TD were each set to 3.5 times, and "stretching ratio (MD x TD)" was indicated as 3.5 x 3.5 in Table 1.

### Heat Treatment Step

Further, the stretched film was fixed with clips to a 150 mm x 150 mm SUS plate so that the relaxation rate was 5%, and the stretched film was heat-treated (heat-set) in a constant-temperature chamber under conditions of 210 degrees C for 4 minutes.

### Various Measurements

With respect to the stretched film after heat-setting, various physical properties (thickness, tensile properties, puncture strength, and impact strength) were evaluated as follows.

Further, as described below, a separate sample was prepared, and the stretching stress and stretching stress ratio of the raw film were measured.

### Thickness (µm)

Each of the films of Examples 1 to 10 and Comparative Examples 1 to 3 was measured using a thickness gauge (ID-C112C, produced by Mitutoyo Corporation). The results are shown in Table 1.

### Tensile Properties (Elastic Modulus (MPa) and Tensile Strength (MPa))

Each of the films of Examples 1 to 10 and Comparative Examples 1 to 3 was cut into a specimen having a width of 15 mm and a length of 180 mm, and tensile properties of the film in the MD, the TD, a direction of 45 degrees with respect to the TD, and a direction of 135 degrees with respect to the TD were measured.

As the tensile properties of each film, the elastic modulus and the tensile strength when the film was elongated by 80% were measured using an Instron 5965 dual-column tabletop testing machine in accordance with ASTM D882. The results are shown in Table 1.

### Puncture Strength (N/cm)

Each of the films of Examples 1 to 10 and Comparative Examples 1 to 3 was punched out into a circular shape having a diameter of 16 mm to prepare a test sample. A needle having a diameter of 1 mm was pierced into each test sample at a puncture speed of 200 mm/min, and the strength (N) required for the needle to penetrate the test sample was measured as puncture strength (N/cm). The results are shown in Table 1.

### Impact Strength (J/m)

Each of the films of Examples 1 to 10 and Comparative Examples 1 to 3 was cut into a size of 10 cm x 10 cm to prepare a square test sample. Using a film impact tester (model No. 181) produced by YASUDA SEIKI SEISAKUSHO, LTD., a semispherical pendulum (diameter: 1.0 inch) was struck against the fixed square test sample, and the impact strength (J/m) required for punching out the test sample was measured. The results are shown in Table 1.

### Stretching Stress Ratio

Using the above-described polyamide resin and ethylene-(meth)acrylate-maleic anhydride copolymer (in Comparative Example 1, only the polyamide resin), a sheet having a thickness of 40 µm was formed with a T-die extrusion molding machine produced by Labtech. The sheet was cut into a square having an MD of 85 mm and a TD of 85 mm, thereby preparing an unstretched raw film.

Using a biaxial stretching birefringence apparatus produced by EVER SOKKI Co., Ltd. (model No. RS-2KI), the unstretched raw film was stretched under conditions of a stretching temperature of 110 degrees C, a preheating time of 60 sec, and a stretching speed of 30 mm/sec, and the stress was measured. In Example 1, Example 5, Example 9, and Comparative Examples 1 and 2, stretching was performed under conditions of MD x TD = 3.3 x 3.3. In Examples 2 to 4, Examples 6 to 8, Example 10, and Comparative Example 3, stretching was performed under conditions of MD x TD = 3.5 x 3.5. In each case, the maximum stresses in the MD and the TD were measured. The stretching stress ratio was determined based on the measurement results and the following equation. The results are shown in Table 1. 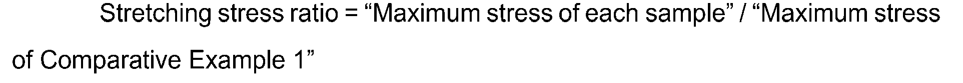 Stretching stress ratio = "Maximum stress of each sample" / "Maximum stress of Comparative Example 1"

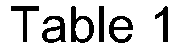

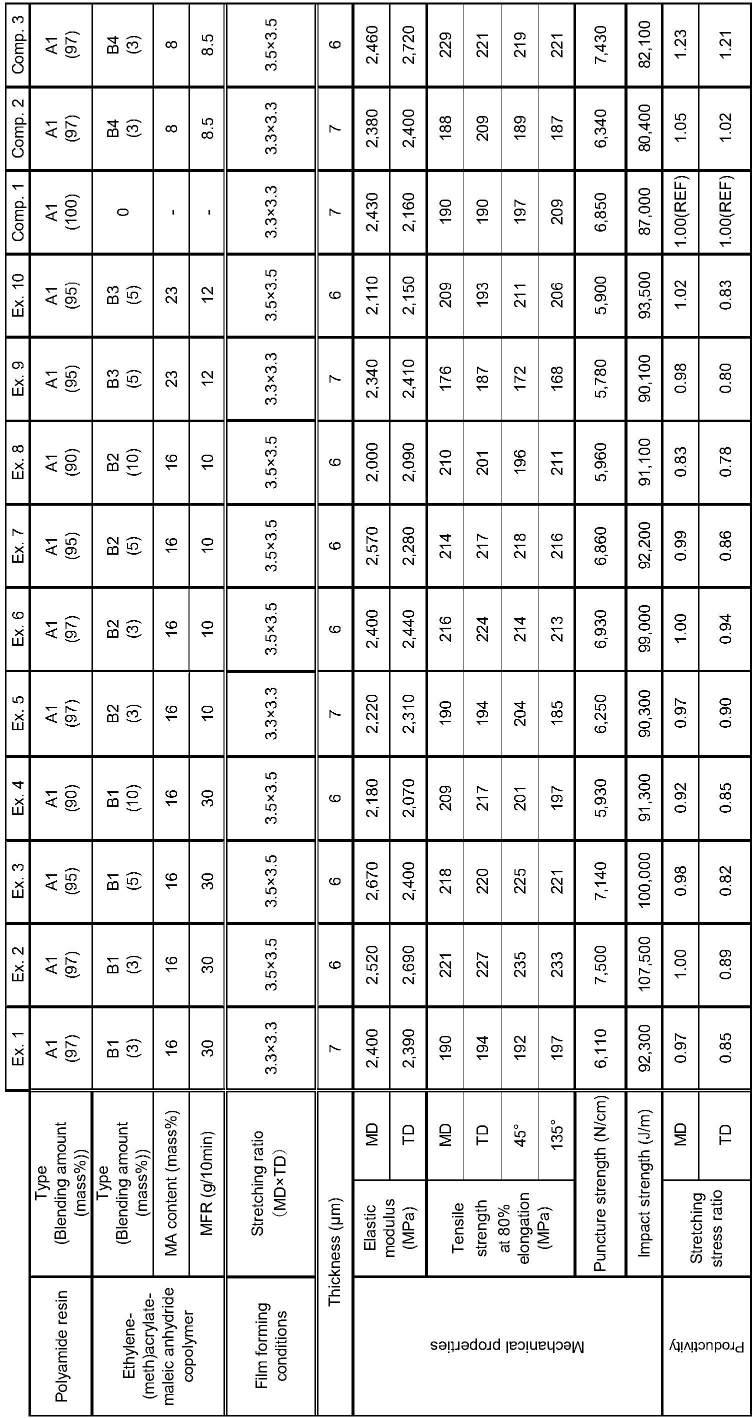

As shown in Table 1, in the raw films of Examples 1 to 10 containing a composition according to an aspect of the invention, at least one of the maximum stress in the MD or the maximum stress in the TD is lower than that of the raw film of Comparative Example 1. Therefore, the stretching ratio for producing a stretched film from a raw film according to an aspect of the invention can be increased. This improves the tensile strength of the resulting stretched film, making it possible to produce a deep-drawable stretched film.

Further, the stretched films of Examples 1 to 10 containing a composition according to an aspect of the invention have sufficient tensile strength, puncture strength, and tensile strength at break. Therefore, a stretched film according to aspect of the invention makes it possible to produce a deep-drawable packaging material in which pinholes are less likely to be formed during draw-forming of an LiB exterior material or the like.

### Evaluation 2

Films were produced and evaluated according to a production method below. The raw materials of the films used in the Examples and Comparative Examples were as follows. The blending amounts of the raw materials were as shown in Table 2.

### Examples 11 and 12

### Polyamide Resin

A1: Nylon 6 (trade name: UBE NYLON / grade name: 1022 / produced by UBE Corporation)

### Ethylene-(Meth)acrylate-Maleic Anhydride Copolymer

B1: Ethylene-methyl acrylate-maleic anhydride copolymer (trade name: REXPEARL ET530H / produced by Japan Polyethylene Corporation)

### Comparative Example 4

### Polyamide Resin

A1: Nylon 6 (trade name: UBE NYLON / grade name: 1022 / produced by UBE Corporation)

### Production of Film

Using the film production apparatus 80 illustrated in Fig. 2, the films of Examples 11 to 12 and Comparative Example 4 were produced.

### Raw Film Production Step

The above-described polyamide resin and ethylene-(meth)acrylate-maleic anhydride copolymer (in Comparative Example 4, only the polyamide resin) were melt-kneaded by the extruder 71, then extruded into a tubular shape through the circular die 72, and the tubular molten resin was cooled (quenched) by the water-cooling ring 73, thereby forming the raw film 2.

### Biaxial Stretching Step

As illustrated in Fig. 2, the raw film 2 produced in the raw-film production step was introduced, as a flattened film, into the apparatus by the pinch roll 11, and then the raw film 2 was bubble-stretched by heating with infrared rays in the heating unit 12.

The stretching speed in the biaxial stretching step was 120 m/min.

In Examples 11 and 12, the stretching ratio in the MD was 3.4 times and the stretching ratio in the TD was 3.5 times, and "stretching ratio (MD x TD)" was indicated as 3.4 x 3.5 in Table 2. In Comparative Example 4, the stretching ratio in the MD was 3.0 times and the stretching ratio in the TD was 3.3 times, and "stretching ratio (MD x TD)" was indicated as 3.0 x 3.3 in Table 2.

### First Heat Treatment Step

The first heat treatment was performed while both end portions of the film 3 sent from the biaxial stretching step were gripped by clips (not illustrated) of the tenter 21.

The heat treatment temperature in the first heat treatment was 150 degrees C.

### Separation Step

After the first heat treatment step, the flattened film 3 sent via the guide roll 31 was slit at both end portions by the blade 321 of the trimming apparatus 32, as illustrated in Fig. 2, and separated into two films 3A and 3B. The films 3A and 3B were then separated by the pair of separation rolls 33A and 33B positioned vertically apart from each other, while air was interposed between the films 3A and 3B.

These films 3A and 3B were superposed again by the three grooved rolls 34A, 34B, and 34C positioned in this order in the film flow direction.

### Second Heat Treatment Step (Heat-Setting Step)

The second heat treatment (heat-setting) was performed while both end portions of the overlapped films 3A and 3B were gripped by clips (not illustrated) of the tenter 41.

The heat treatment temperature in the second heat treatment was 213 degrees C.

### Various Measurements

With respect to the stretched film after heat-setting, various physical properties (thickness, tensile properties (elastic modulus, tensile strength, tensile strength at break, and elongation), puncture strength, and impact strength) were evaluated. The thickness, tensile properties (elastic modulus and tensile strength), puncture strength, and impact strength were measured in the same manner as in Evaluation 1, and the tensile properties (tensile strength at break and elongation) and resistance to flexing-induced pinholing were evaluated as follows.

Further, deep-draw formability (forming depth) of the obtained stretched film was evaluated.

The results of the evaluations are shown in Table 2.

### Tensile Properties (Tensile Strength at Break (MPa) and Elongation (%))

Each of the films of Examples 11 to 12 and Comparative Example 4 was cut into a piece having dimensions of 15 mm x 180 mm, and the tensile strength at break (MPa) and elongation (%) of the film in the MD and the TD were measured. The tensile strength at break of the film was measured using an Instron 5965 dual-column tabletop testing machine in accordance with ASTM D882.

### Resistance to Flexing-Induced Pinholing

Each of the films of Examples 11 to 12 and Comparative Example 4 was cut into a rectangle having dimensions of 21.0 cm (14.3 inches) x 29.7 cm (11.7 inches) to prepare a rectangular test film. The test film was wound into a cylindrical shape having a length of 21.0 cm (14.3 inches). One end of the cylindrical film was fixed to the outer periphery of a disk-shaped fixed head of a Gelbo flex tester (produced by Nihon Rikagaku Industry Co., Ltd.), and the other end of the cylindrical film was fixed to the outer periphery of a disk-shaped movable head of the tester facing the fixed head at a distance of 17.8 cm (7.0 inches). Then, while the movable head was moved toward the fixed head by 8.8 cm (3.5 inches) along the axes of the two heads facing each other in parallel, the movable head was rotated by 440 degrees. Subsequently, the movable head was moved straight by 6.4 cm (2.5 inches) without rotation, and then these operations were performed in reverse to return the movable head to its initial position. This one-cycle flexing test was continuously repeated at a rate of 40 cycles per minute. The flexing test was carried out for each test film after preparation thereof, under conditions of a total of 1000 cycles at 23 degrees C and a total of 1000 cycles at -20 degrees C. Thereafter, the number of pinholes generated in an area of 17.8 cm (7.0 inches) x 29.7 cm (11.7 inches) of the test film, excluding the portions fixed to the outer peripheries of the fixed head and the movable head, was determined as the number of pinholes per A4 size (number of pinholes per 528.7 cm² (81.9 square inches)).

### Forming Depth

On one surface of each of the films obtained in Examples 11 to 12 and Comparative Example 4, an AL layer (produced by Toyo Aluminium K.K.; trade name: TY-X2; thickness: 40 µm) and a CPP layer (produced by Idemitsu Unitech Co., Ltd.; Unilux RT-610C; thickness: 80 µm) were laminated in this order and bonded together by dry lamination. As the adhesive, TM-K55 as a main agent and CAT-10L as a curing agent, both produced by Toyo-Morton, Ltd., were used.

The female die had dimensions of 120 mm x 100 mm, the male die had dimensions of 118 mm x 98 mm, the clamping force was 0.3 MPa, and the stroke speed was 50 mm/sec, and draw-forming was performed to evaluate the forming depth.

The drawing depth was varied from 5.00 mm to 9.00 mm in increments of 0.5 mm, and forming was performed five times at each depth. The depth at which forming was successfully achieved in all five trials was defined as the forming depth.

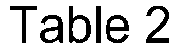

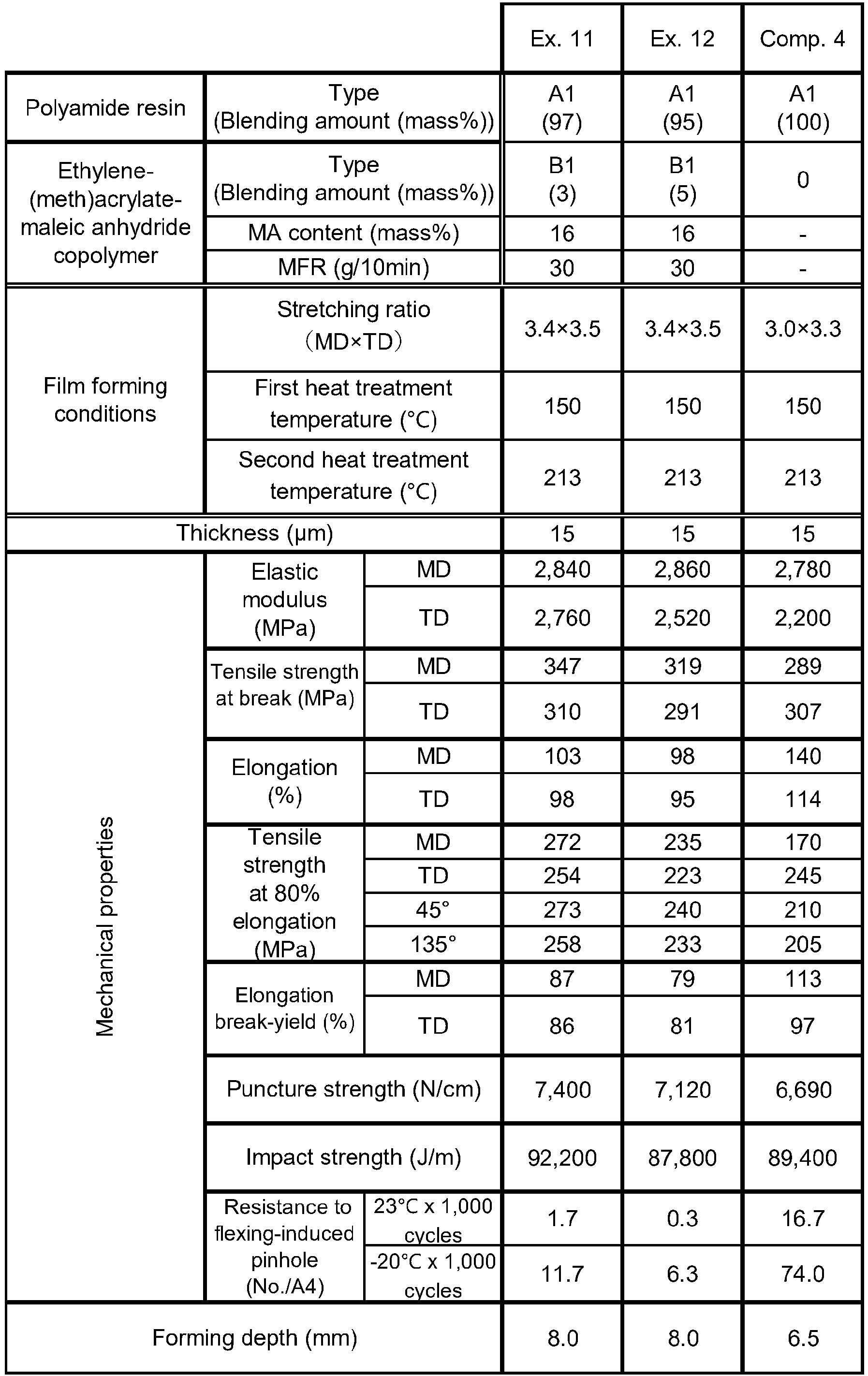

As shown in Table 2, each of the stretched films of Examples 11 and 12 containing a composition according to an aspect of the invention makes it possible to increase the stretching ratio in producing the stretched film from a raw film according to an aspect of the invention. As a result, the tensile strength of the resulting stretched film can be improved. Therefore, as shown in Table 2, the stretched films of Examples 11 and 12 were more deeply drawable than the stretched film of Comparative Example 4.

Preferred embodiments of the invention have been described above with reference to the accompanying drawings. However, the invention is not limited to these examples. It is apparent that a skilled person in the art of the invention can arrive at various alterations and modifications within the scope of the technical idea recited in the appended claims, and it is understood that such alterations and modifications naturally fall within the technical scope of the invention.

### EXPLANATION OF CODES

1...stretched film, 2...raw film, 3...base film, 4...biaxially stretched film, 90...laminate, 91...first layer, 92...second layer, 93...third layer, 100...lithium-ion secondary battery, 101A, 101B...exterior material, 102...positive electrode, 103...separator, 104...negative electrode, 105...electrode assembly, 106...electrolytic solution, 107...positive electrode tab, 108...negative electrode tab

## Claims

1. A composition comprising:
a polyamide resin; and
an ethylene-(meth)acrylate-maleic anhydride copolymer,
wherein a content of a (meth)acrylate structural unit in the ethylene-(meth)acrylate-maleic anhydride copolymer is in a range from 9 mass% to 23 mass%.

2. The composition according to claim 1, wherein the content of the (meth)acrylate structural unit in the ethylene-(meth)acrylate-maleic anhydride copolymer is 20 mass% or less.

3. The composition according to claim 1 or 2, wherein a melt flow rate of the ethylene-(meth)acrylate-maleic anhydride copolymer is 9 g/10 min or more.

4. The composition according to any one of claims 1 to 3, wherein a content of the ethylene-(meth)acrylate-maleic anhydride copolymer in the composition is 10 mass% or less.

5. The composition according to any one of claims 1 to 4, wherein a content of the ethylene-(meth)acrylate-maleic anhydride copolymer in the composition is 1 mass% or more.

6. The composition according to any one of claims 1 to 5, wherein the polyamide resin is at least one resin selected from the group consisting of nylon 6, nylon 8, nylon 9, nylon 10, nylon 11, nylon 12, nylon 4,6, nylon 6,6, nylon 6,10, nylon 6,11, nylon 6,12, nylon 6T, nylon 9T, and meta-xylylenediamine-6-nylon (MXD6).

7. A raw film comprising the composition according to any one of claims 1 to 6.

8. A stretched film comprising the composition according to any one of claims 1 to 6.

9. The stretched film according to claim 8, wherein a tensile strength of the stretched film at 80% elongation in a machine direction, MD, is 190 MPa or more, and a tensile strength of the stretched film at 80% elongation in a transverse direction, TD, is 190 MPa or more.

10. The stretched film according to claim 8 or 9, wherein a puncture strength of the stretched film is 5,900 N/cm or more.

11. A laminate comprising the stretched film according to any one of claims 8 to 10.

12. A packaging material comprising the stretched film according to any one of claims 8 to 10.

13. An exterior material comprising the stretched film according to any one of claims 8 to 10.

14. An exterior material comprising the laminate according to claim 11.

15. A method for producing the stretched film according to any one of claims 8 to 10, the method comprising:
producing a raw film from a raw material; and
stretching the raw film by tubular biaxial stretching.

16. A method for producing a stretched film, the method comprising:
producing the raw film according to claim 7; and
stretching the raw film by tubular biaxial stretching.
